(19) Europäisches Patentamt / European Patent Office / Office européen des brevets

(11) **EP 3 483 209 A1**

(12) **EUROPEAN PATENT APPLICATION**
published in accordance with Art. 153(4) EPC

(43) Date of publication:
**15.05.2019 Bulletin 2019/20**

(21) Application number: **16908596.6**

(22) Date of filing: **29.08.2016**

(51) Int Cl.:
*C08J 9/12* (2006.01)          *C08J 9/14* (2006.01)
*C08L 75/06* (2006.01)

(86) International application number:
**PCT/CN2016/097081**

(87) International publication number:
**WO 2018/010271 (18.01.2018 Gazette 2018/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.07.2016 CN 201610552489**

(71) Applicant: **Zhejiang Xinhengtai Advanced Material Co., Ltd.**
**Jiaxing, Zhejiang 314005 (CN)**

(72) Inventor: **JIANG, Xiulei**
**Jiaxing**
**Zhejiang314005 (CN)**

(74) Representative: **2s-ip Schramm Schneider Bertagnoll**
**Patent- und Rechtsanwälte Part mbB**
**Postfach 86 02 67**
**81629 München (DE)**

(54) **HIGH EXPANSION THERMOPLASTIC POLYURETHANE MICROPOROUS FOAM SHEET AND PRODUCTION METHOD THEREFOR**

(57) Embodiments of the present disclosure provide a microcellular thermoplastic polyurethane foamed sheet with a high foaming ratio, comprising components of: TPU with 70~100 parts by weight, and polydimethylsiloxane with 0 ~30 parts by weight. The present disclosure has the following advantages: because the supercritical fluid has a relatively high solubility in the polydimethylsiloxane while the polydimethylsiloxane has a relatively low interfacial tension, mixing a small amount of polydimethylsiloxane into the TPU significantly facilitates the diffusion speed of the supercritical fluid in the TPU and shortens the diffusion equilibrium time of the supercritical fluid in the TPU. A die having a die cavity slightly larger than that of the TPU sheet and a surface spread out with an air-permeable metal material enables the supercritical fluid to be simultaneously diffused into the TPU sheet through the upper and lower surfaces of the TPU sheet, which, compared with diffusion of the supercritical fluid into the TPU sheet only through the upper surface, shortens the diffusion distance as well as the diffusion equilibrium time and improves productivity. Embodiments of the present disclosure further provide a method of manufacturing a microcellular thermoplastic polyurethane foamed sheet with a high foaming ratio.

FIG. 1

**Description**

**FIELD**

Embodiments of the present disclosure relate to a microcellular thermoplastic polyurethane foamed sheet with a high foaming ratio and a method of manufacturing the same.

**BACKGROUND**

Ductile and elastic polymeric foam manufactured by foaming techniques is applied in a wide array of areas such as shoe materials, furniture, electronic devices, transportation vehicles, sports equipment, protective packaging due to its superior properties of shock absorption, buffer, heat insulation, noise reduction, sound absorption, dustproof and waterproof, etc. Basic characteristics of the ductile and elastic polymeric foam include a porous structure and an internally formed chemical cross-linked structure, e.g., cross-linked EVA foamed materials, various kinds of foamed rubber materials, foamed PVC materials, etc. These ductile and elastic materials formed by chemical cross-link foaming have a complex manufacturing process and cause a relatively high pollution; besides, the products are toxic and odorous, and are relatively hard to be recovered and recycled, thereby causing a pollution to the environment and a hazard to human health.

Thermoplastic polyurethane (TPU) is a linear block polymer formed by alternate soft and hard blocks which are thermodynamically incompatible. Its unique microphase separation structure provides an outstanding elastic property and meanwhile has characteristics of high strength, high abrasion resistance, high oil resistance, and high cold resistance, etc. The foamed TPU material has an elasticity and a compressive deformation property superior to the crosslinking foamed material. Further, compared with the crosslinked ductile and elastic foamed material, the foamed TPU material is clean, environment-friendly, recyclable, phthalate-free, and halogen-free.

The chemical crosslink foaming can only produce 2 or 3 times of foamed TPU sheets. Current foamed TPU materials with a higher foaming ratio are mainly obtained through a bead foaming technology. The foamed TPU beads may be heated within a die by steam, causing their surfaces to be welded to thereby form a foamed TPU product.

The PCT patent WO2007/082838, the U.S. Patent US2012/0329892 A1, and the Chinese patent 200780002602.9 disclose two methods of manufacturing foamed TPU beads. One method is to charge TPU solid particles into a hot aqueous suspension in an autoclave; with introduction of a gaseous blowing agent, the charged TPU materials may be dissolved and diffused, giving expandable TPU beads containing the blowing agent; then, cooled and decompressed expandable TPU beads are heated abruptly to be expanded, giving foamed TPU beads; or the hot aqueous suspension inside the autoclave is suddenly decompressed under a high temperature and a high pressure, triggering growth of bubbles, thereby obtaining foamed TPU beads. The other method is to introduce a gaseous blowing agent into an extruder, cause the gaseous blowing agent to be dissolved in a TPU melt through screw shear, directly foam at a die head to form foamed TPU beads, or pelletize under water to form expandable TPU beads containing a blowing agent, and then heat and foam to give TPU foamed beads.

Molding of TPU beads facilitates manufacturing of irregular foamed TPU products with a complex structure; however, products formed by welding of beads have rough surfaces and unaesthetic appearance, without a fine and smooth sense of surface touch. Besides, the steam welding process requires a relatively high energy consumption and a high cost. Besides, the molding process causes further shrinkage of foamed TPU beads, causing a generally low foaming ratio of TPU bead formed products.

The Chinese patent 201110054581.3 discloses a technology for preparing thermoplastic polymer foamed sheet using supercritical $CO_2$. However, because the foaming temperature is lower than the flow temperature of polymer and $CO_2$ is diffused at a relatively low rate in the polymer, it is impossible to implement efficient production of microcellular TPU foamed sheets with a relatively high thickness.

**SUMMARY**

A technical problem to be solved by the present disclosure is provide a microcellular thermoplastic polyurethane foamed sheet with a high foaming ratio and a method of manufacturing the same, thereby overcoming the low foaming ratio deficiency of existing TPU bead formed products.

To solve the technical problem above, the present disclosure provides a microcellular thermoplastic polyurethane foamed sheet with a high foaming ratio, comprising components of: TPU with 70-100 parts by weight, and polydimethylsiloxane with 0 -30 parts by weight.

Preferably, the microcellular thermoplastic polyurethane foamed sheet with a high foaming ratio comprises components of: TPU with 90~100 parts by weight, and polydimethylsiloxane with 0~10 parts by weight.

Preferably, the TPU has a molecular weight of 40,000 ~ 90,000 and a hardness of Shore A65 ~ 95.

Preferably, the polydimethylsiloxane is a compound selected from the group consisting of amino-terminated polydimethylsiloxane, a, w-dihydroxypolydimethylsiloxane, polydimethylsiloxane with a diol end group, hydroxy terminated polydimethylsiloxane, hydrogen terminated polydimethylsiloxane, and a combination of two or more thereof.

Preferably, the TPU is prepared with a polyisocyanate, a polyol, and a chain extender as raw materials, wherein the polyisocyanate is selected from the group consisting of diphenylmethane diisocyanate and toluene diisocyanate; the polyol is selected from the group consisting of a polyester polyol, a polyether polyol, a polyacrylic acid polyol, a polycarbonate polyol, and a polyolefin polyol; and the chain extender is selected from the group consisting of a butanediol, an ethylene glycol, and a propylene glycol.

Preferably, an average molar mass of the polydimethylsiloxane is 2000~5000g/mol.

A method of manufacturing a microcellular thermoplastic polyurethane foamed sheet with a high foaming ratio comprises steps of:

a) charging dehumidified and dried components into an extruder, then forming through a coat hanger-type die head, cooling, and fixing the size of the formed TPU to cut, and obtaining a TPU solid sheet;

b) putting the TPU solid sheet obtained from step a) into a high-pressure resistance foaming die; closing and sealing the die; heating the die to 140°C ~ 160°C; then introducing a supercritical fluid into the die, causing the supercritical fluid to be rapidly diffused into the TPU solid sheet at a high temperature and a high pressure; after the supercritical fluid reaches a diffusion equilibrium time, cooling to 90°C ~ 130°C and instantaneously releasing the pressure of the supercritical fluid inside the die, such that the TPU solid sheet inside the die expands and grows till filling the entire die space; finally, rapidly opening the die, such that the TPU foamed sheet grows continuously till stop, thereby forming the microcellular TPU foamed sheet.

Preferably, the die comprises an upper die and a lower die, and a die cavity formed between the upper die and the lower die; the upper die is provided with an inlet valve and an exhaust valve; a volume ratio between the die cavity and the TPU solid sheet is 6:5 ~ 5:1, where the inlet valve may implement introduction of supercritical fluid, and the exhaust valve may implement rapid and instantaneous release of the supercritical fluid inside the die, thereby facilitating expansion and growth of the TPU sheet inside the die.

Preferably, one porous air-permeable metal layer is spread out on an inner surface of the die cavity, which shortens a diffusion path of the supercritical fluid inside the TPU sheet and thereby reduces a saturation duration of the supercritical fluid.

Preferably, the supercritical fluid is a supercritical fluid selected from the group consisting of supercritical $CO_2$, supercritical butane, and supercritical pentane, or a mixture of two thereof, or a mixture of more than two thereof; besides, a pressure of the supercritical fluid is 5~20MPa, the diffusion equilibrium time of the supercritical fluid is 10~240min. The supercritical fluids may be combined dependent on different needs, giving a good practicality.

In view of the above, the present disclosure has the following advantages: because the supercritical fluid has a relatively high solubility in the polydimethylsiloxane while the polydimethylsiloxane has a relatively low interfacial tension, mixing a small amount of polydimethylsiloxane into the TPU significantly facilitates the diffusion speed of the supercritical fluid in the TPU and shortens the diffusion equilibrium time of the supercritical fluid in the TPU. A die having a die cavity slightly larger than that of the TPU sheet and a surface spread out with an air-permeable metal material enables the supercritical fluid to be simultaneously diffused into the TPU sheet through the upper and lower surfaces of the TPU sheet, which, compared with diffusion of the supercritical fluid into the TPU sheet only through the upper surface, shortens the diffusion distance as well as the diffusion equilibrium time and improves productivity.

First, the supercritical fluid enters the TPU matrix with a relatively high diffusion speed at a high temperature, and then the foaming temperature is lowered to an appropriate temperature according to a target foaming ratio; the die is opened to foam; this also leverages the property of the supercritical fluid whose diffusion rate in the TPU increases with the temperature, thereby shortening the foaming duration and improving productivity. By rapidly relieving the pressure of and foaming the clean supercritical fluid, the procedure becomes simpler; meanwhile, the product is nontoxic and pollution free; the manufactured TPU sheet has a relatively small cell size and a relatively large cell density, thereby providing a relatively large foaming ratio and a superb mechanical performance.

## BRIEF DESCRIPTION OF THE DRAWINGS

Hereinafter, the present disclosure will be described in further detail with reference to the accompanying drawings:

Fig. 1 is an SEM graph of internal cells of a foamed TPU sheet obtained from example 1;

Fig. 2 is an SEM graph of internal cells of a foamed TPU sheet obtained from example 2;

Fig. 3 is an SEM graph of internal cells of a foamed TPU sheet obtained from example 3; and

Fig. 4 is an SEM graph of internal cells of a foamed TPU sheet obtained from example 4.

## DETAILED DESCRIPTION OF EMBODIMENTS

### Embodiment 1

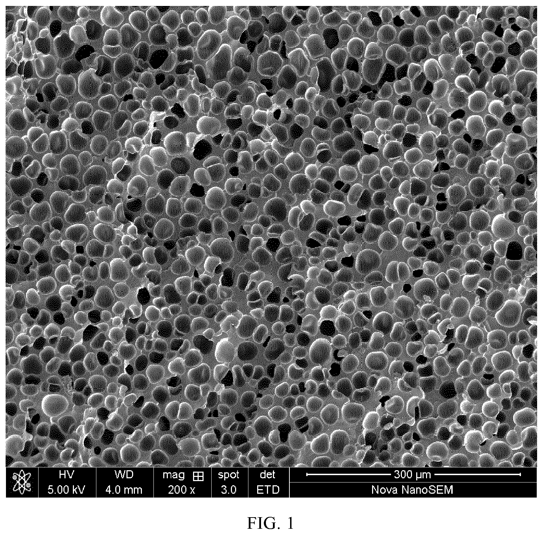

As shown in Fig. 1, a microcellular thermoplastic polyurethane foamed sheet with a high foaming-ratio comprises components of: TPU with 100 parts by weight, where the molecular weight of the TPU is 60,000, the hardness of the TPU is Shore A 75, and the TPU is a polyester TPU particle.

A method of manufacturing a microcellular thermoplastic polyurethane foamed sheet with a high foaming ratio comprises steps of:

a) charging dehumidified and dried TPU into an extruder, and then forming through a coat hanger-type die head, cooling, and fixing the size of the formed TPU to cut, where the formed TPU is cut into a TPU solid sheet with a width of 150mm, a length of 400mm, and a thickness of 10mm;

b) putting the TPU solid sheet obtained from step a) into a high-pressure resistance foaming die, where a volume ratio between the die cavity in the die and the TPU solid sheet is 3:1; the die is closed through a hydraulic pressure, and the die is sealed under stress through a sealing ring; the die is heated to 140°C by a heat conductive oil; then a supercritical fluid $CO_2$ of 10 MPa is introduced into the die; the diffusion equilibrium time of the supercritical fluid is 180min; then, the temperature is cooled to 110°C; the $CO_2$ gas inside the die is rapidly discharged via an exhaust valve; the TPU solid sheet expands and grows inside the die till filling the entire die space; finally, the die is rapidly opened; the TPU foamed sheet continues growth till stop, thereby forming the microcellular TPU foamed sheet.

After the microcellular TPU foamed sheet is cured at a normal temperature and a normal pressure, the size of the microcellular TPU foamed sheet is measured to have a width of 225mm, a length of 600mm, and a thickness of 15mm.

### Embodiment II

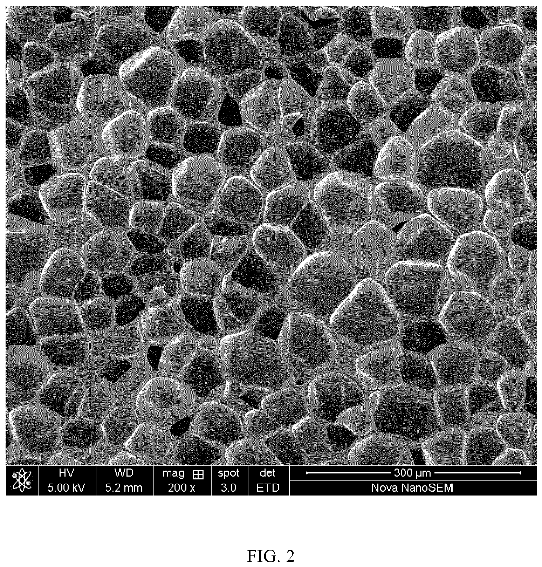

As shown in Fig. 2, a microcellular thermoplastic polyurethane foamed sheet with a high foaming ratio comprises components of: TPU with 95 parts by weight, and polydimethylsiloxane with 5 parts by weight, where the molecular weight of the TPU is 65,000, the hardness of the TPU is Shore A 80, the TPU is a polyether TPU particle, and the polydimethylsiloxane is an amino-terminated polydimethylsiloxane.

A method of manufacturing a microcellular thermoplastic polyurethane foamed sheet with a high foaming ratio comprises steps of:

a) mixing TPU and polydimethylsiloxane, dehumidifying and drying the mixture, and then charging the mixture into an extruder, and then forming through a coat hanger-type die head, cooling, and fixing a size of the formed mixture to cut, where the formed mixture is cut into a TPU solid sheet with a width of 150mm, a length of 400mm, and a thickness of 10mm;

b) putting the TPU solid sheet obtained from step a) into a high-pressure resistance foaming die, where a volume ratio between the die cavity in the die and the TPU solid sheet is 2:1; the die is closed under a hydraulic pressure, and the die is sealed under stress through a sealing ring; the die is heated to 150°C by a heat conductive oil; then a supercritical fluid $CO_2$ of 15 MPa is introduced into the die; the diffusion equilibrium time of the supercritical fluid is 100min; then, the temperature is cooled to 130°C; the $CO_2$ gas inside the die is rapidly discharged via an exhaust valve; the TPU solid sheet expands and grows inside the die till filling the entire die space; finally, the die is rapidly opened; the TPU foamed sheet continues growth till stop, thereby forming the microcellular TPU foamed sheet.

After the microcellular TPU foamed sheet is cured at a normal temperature and a normal pressure, the size of the microcellular TPU foamed sheet is measured to have a width of 300mm, a length of 800mm, and a thickness of 30mm.

## Embodiment III

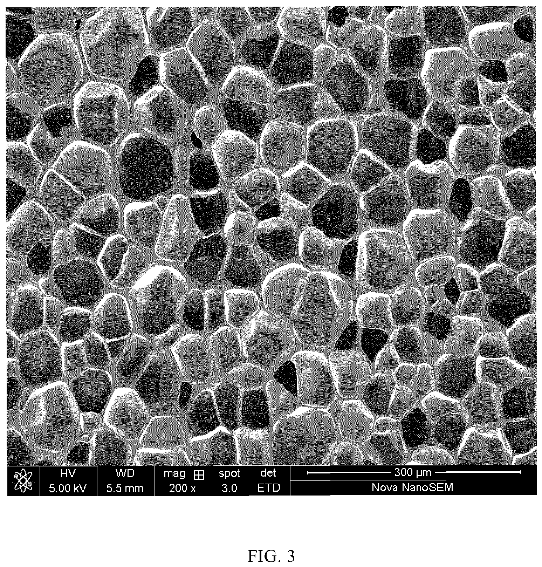

As shown in Fig. 3, a microcellular thermoplastic polyurethane foamed sheet with a high foaming ratio comprises components of: TPU with 100 parts by weight, where the molecular weight of the TPU is 80,000, the hardness of the TPU is Shore A 85, and the TPU is a polyether TPU particle.

A method of manufacturing a microcellular thermoplastic polyurethane foamed sheet with a high foaming ratio comprises steps of:

a) charging dehumidified and dried TPU into an extruder, and then forming through a coat hanger-type die head, cooling, and fixing the size of the formed TPU to cut, where the formed TPU is cut into a TPU solid sheet with a width of 500mm, a length of 1500mm, and a thickness of 20mm;

b) putting the TPU solid sheet obtained from step a) into a high-pressure resistance foaming die, where a volume ratio between the die cavity in the die and the TPU solid sheet is 3:2; the die is closed under a hydraulic pressure, and the die is sealed under stress through a sealing ring; the die is heated to 155°C by a heat conductive oil; then a supercritical fluid $CO_2$ of 17MPa is introduced into the die, where the supercritical fluid includes supercritical $CO_2$ and the supercritical butane and a weight ratio between the supercritical $CO_2$ and the supercritical butane is 9:1; the diffusion equilibrium time of the supercritical fluid is 80min; then, the temperature is cooled to 120°C; the supercritical fluid inside the die is rapidly discharged via an exhaust valve; the TPU solid sheet expands and grows inside the die till filling the entire die space; finally, the die is rapidly opened; the TPU foamed sheet continues growth till stop, thereby forming the microcellular TPU foamed sheet.

After the microcellular TPU foamed sheet is cured at a normal temperature and a normal pressure, the size of the microcellular TPU foamed sheet is measured to have a width of 1250mm, a length of 3750mm, and a thickness of 50mm.

## Embodiment IV

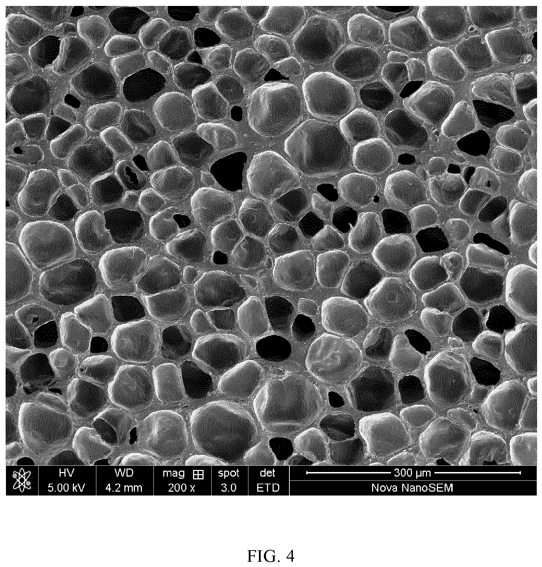

As shown in Fig. 4, a microcellular thermoplastic polyurethane foamed sheet with a high foaming ratio comprises components of: TPU with 100 parts by weight, where the molecular weight of the TPU is 75,000, the hardness of the TPU is Shore A 90, and the TPU is a polycarbonate TPU particle.

A method of manufacturing a microcellular thermoplastic polyurethane foamed sheet with a high foaming ratio comprises steps of:

a) charging dehumidified and dried TPU into an extruder, and then forming through a coat hanger-type die head, cooling, and fixing a size of the formed TPU to cut, where the formed TPU is cut into a TPU solid sheet with a width of 500mm, a length of 1500mm, and a thickness of 20mm;

b) putting the TPU solid sheet obtained from step a) into a high-pressure resistance foaming die, where a volume ratio between the die cavity in the die and the TPU solid sheet is 5:1; the die is closed under a hydraulic pressure, and the die is sealed under stress through a sealing ring; the die is heated to 145°C by a heat conductive oil; then a supercritical fluid $CO_2$ of 20MPa is introduced into the die, where the supercritical fluid includes supercritical $CO_2$ and the supercritical butane, and a weight ratio between the supercritical $CO_2$ and the supercritical butane is 4:1; the diffusion equilibrium time of the supercritical fluid is 60min; then, the temperature is cooled to 110°C; the supercritical fluid inside the die is rapidly discharged via an exhaust valve; the TPU solid sheet expands and grows inside the die till filling the entire die space; finally, the die is rapidly opened; the TPU foamed sheet continues growth till stop, thereby forming the microcellular TPU foamed sheet.

After the microcellular TPU foamed sheet is cured at a normal temperature and a normal pressure, the size of the microcellular TPU foamed sheet is measured to have a width of 1350mm, a length of 4050mm, and a thickness of 54mm.

The apparent density of the microcellular TPU foamed sheet is measured according to the GB/T6343-2009 standard, and then the final foaming ratio of the microcellular foamed material may be computed. The foaming ratio $(R_{ex}) = \rho_{TPU}/\rho_{TPU\,foam}$, where $\rho_{TPU}$ denotes the density of non-foamed TPU sheet, and $\rho_{TPU\,foam}$ denotes the density of the TPU microcellular foamed material. The microcellular TPU foamed sheet is wet-off by liquid nitrogen, a section of which is sputtered with gold; cellular morphology inside the foamed material is measured using SEM (scanning electron microscope) to capture the SEM graph of cells, and then the cell size is measured and the cell density is calculated according to the SEM graph. Cell density $N$ (unit: piece/cm$^3$) = $(n/A)^{3/2} \times R_{ex}$, where $n$ denotes the number of cells on the SEM graph, and *A* denotes a captured area (unit: cm$^2$) of the SEM graph.

The compression permanent deformation performance of the microcellular TPU foamed sheet is measured according to the GB/T 6669-2008 standard. The adjusted TPU foamed sheet is cut into a sample of 50mm (length)×50mm (width)×25mm (thickness); under normal temperature, the sample is compressed till 50% thickness, and the compression is released after holding for 72 hours. The compression permanent deformation is computed according to the following expression:

$$CS = \frac{d_0 - d_r}{d_0} \times 100\%$$

where *CS* - compression performant deformation, expressed by percentage (%).

$d_0$----initial thickness of the sample.

$d_r$---final thickness of the sample.

The bouncing ball performance of the microcellular TPU foamed sheet is measured according to ASTM D3547. The adjusted microcellular TPU foamed sheet is placed at a test position of a ball bouncing tester; the steel ball falls freely from a 500mm height; the ball bouncing tester automatically calculates a ratio (%) between a maximum bouncing height of the ball and the height from which the steel ball falls, which is referred to as a bouncing ratio.

The surface hardness of the foamed material is measured by a portable shore C-type hardness gauge.

Table 1: Measure Results

| Items | Embodiment 1 | Embodiment 2 | Embodiment 3 | Embodiment 4 |
|---|---|---|---|---|
| Foaming Ratio | 3.3 | 8 | 15.6 | 19.6 |
| Hardness (shore C) | 48 | 41 | 34 | 27 |
| Average Size, $\mu$m | 45 | 62 | 89 | 113 |
| Cell Density, piece/cm3 | $1.4 \times 10^8$ | $5.5 \times 10^7$ | $2.8 \times 10^7$ | $5.7 \times 10^6$ |
| Ball bouncing ratio, % | 43 | 51 | 59 | 63 |
| compression permanent deformation ratio, % | 13 | 11 | 9 | 7 |

Besides the preferred embodiments above, the present disclosure further has other embodiments. Those skilled in the art may make various alterations and transformations based on the present disclosure, which should all fall into the scope defined by the appended claims of the present disclosure without departing from the spirit of the present disclosure.

**Claims**

1. A microcellular thermoplastic polyurethane foamed sheet with a high foaming ratio, comprising components of: TPU with 70~100 parts by weight, and polydimethylsiloxane with 0~30 parts by weight.

2. The microcellular thermoplastic polyurethane foamed sheet with a high foaming ratio according to claim 1, comprising components of: TPU with 90~100 parts by weight, and polydimethylsiloxane with 0~10 parts by weight.

3. The microcellular thermoplastic polyurethane foamed sheet with a high foaming ratio according to claim 1, wherein the TPU has a molecular weight of 40,000 ~ 90,000 and a hardness of Shore A 65 ~ 95.

4. The microcellular thermoplastic polyurethane foamed sheet with a high foaming ratio according to claim 1, wherein the polydimethylsiloxane is a compound selected from the group consisting of amino-terminated polydimethylsiloxane, a, w-dihydroxypolydimethylsiloxane, polydimethylsiloxane with a diol end group, hydroxy terminated polydimethylsiloxane, hydrogen terminated polydimethylsiloxane, and a combination of two or more thereof.

5. The microcellular thermoplastic polyurethane foamed sheet with a high foaming ratio according to claim 1, wherein the TPU is prepared with a polyisocyanate, a polyol, and a chain extender as raw materials, wherein the polyisocyanate is selected from the group consisting of diphenylmethane diisocyanate and toluene diisocyanate; the polyol is selected from the group consisting of a polyester polyol, a polyether polyol, a polyacrylic acid polyol, a polycarbonate polyol, and a polyolefin polyol; and the chain extender is selected from the group consisting of a butanediol, an ethylene glycol, and a propylene glycol.

6. The microcellular thermoplastic polyurethane foamed sheet with a high foaming ratio according to claim 1, wherein an average molar mass of the polydimethylsiloxane is 2000~5000g/mol.

7. A method of manufacturing the microcellular thermoplastic polyurethane foamed sheet with a high foaming ratio according to claim 1, comprising steps of:

   a) charging dehumidified and dried components into an extruder, then forming through a coat hanger-type die head, cooling, and fixing the size of the formed TPU to cut, and obtaining a TPU solid sheet;
   b) putting the TPU solid sheet obtained from step a) into a high-pressure resistance foaming die; closing and sealing the die; heating the die to 140°C ~ 160°C; then introducing a supercritical fluid into the die, causing the supercritical fluid to be rapidly diffused into the TPU solid sheet at a high temperature and a high pressure; after the supercritical fluid reaches a diffusion equilibrium time, cooling to 90°C ~ 130°C and instantaneously releasing the pressure of the supercritical fluid inside the die, such that the TPU solid sheet inside the die expands and grows till filling the entire die space; finally, rapidly opening the die, such that the TPU foamed sheet grows continuously till stop, thereby forming the microcellular TPU foamed sheet.

8. The method of manufacturing the microcellular thermoplastic polyurethane foamed sheet with a high foaming ratio according to claim 7, wherein the die comprises an upper die and a lower die, and a die cavity formed between the upper die and the lower die; the upper die is provided with an inlet valve and an exhaust valve; a volume ratio between the die cavity and the TPU solid sheet is 6:5 ~ 5:1.

9. The method of manufacturing the microcellular thermoplastic polyurethane foamed sheet with a high foaming ratio according to claim 7, wherein one porous air-permeable metal layer is spread out on an inner surface of the die cavity, which shortens a diffusion path of the supercritical fluid inside the TPU sheet and thereby reduces a saturation duration of the supercritical fluid.

10. The method of manufacturing the microcellular thermoplastic polyurethane foamed sheet with a high foaming ratio according to claim 7, wherein the supercritical fluid is a supercritical fluid selected from the group consisting of supercritical $CO_2$, supercritical butane, and supercritical pentane, or a mixture of two thereof, or a mixture of more than two thereof; besides, a pressure of the supercritical fluid is 5~20MPa, the diffusion equilibrium time of the supercritical fluid is 10~240min.

| | HV | WD | mag ⊞ | spot | det | ———— 300 µm ———— |
| | 5.00 kV | 4.0 mm | 200 x | 3.0 | ETD | Nova NanoSEM |

FIG. 1

FIG. 2

FIG. 3

| HV | WD | mag ⊞ | spot | det | ⟻————— 300 μm —————⟼ |
|---|---|---|---|---|---|
| 5.00 kV | 4.2 mm | 200 x | 3.0 | ETD | Nova NanoSEM |

FIG. 4

# INTERNATIONAL SEARCH REPORT

| International application No. |
|---|
| PCT/CN2016/097081 |

**A. CLASSIFICATION OF SUBJECT MATTER**

C08J 9/12 (2006.01) i; C08J 9/14 (2006.01) i; C08L 75/06 (2006.01) i

According to International Patent Classification (IPC) or to both national classification and IPC

**B. FIELDS SEARCHED**

Minimum documentation searched (classification system followed by classification symbols)

C08J; C08L

Documentation searched other than minimum documentation to the extent that such documents are included in the fields searched

Electronic data base consulted during the international search (name of data base and, where practicable, search terms used)

CNABS, CNTXT, WPI, EPODOC: foaming, polyurethane, tpu, tpur, tpus, foam, hole, plate, sheet, silane, siloxane

**C. DOCUMENTS CONSIDERED TO BE RELEVANT**

| Category* | Citation of document, with indication, where appropriate, of the relevant passages | Relevant to claim No. |
|---|---|---|
| X | CN 1400986 A (MITSUI CHEMICALS INC.) 05 March 2003 (05.03.2003) description, page 6, paragraph 1, page 10, paragraph 3 to page 12, paragraph 4, page 17, the last paragraph to page 18, paragraph 2 and page 54, the last paragraph | 1-10 |
| X | CN 101781406 A (BEIJING CHN-TOP MACHINERY CO., LTD.) 21 July 2010 (21.07.2010) claims 1-4 | 1-6 |
| X | CN 105694430 A (ANHUI TIAN'AN NEW MATERIAL CO., LTD.) 22 June 2016 (22.06.2016) claims 1-6 | 1-6 |
| X | US 2015038606 A1 (NIKE INC.) 05 February 2015 (05.02.2015) claims 1-18 | 1-6 |
| X | US 2015038605 A1 (NIKE INC.) 05 February 2015 (05.02.2015) claims 1-30 | 1-6 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 March 2017 | 31 March 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer JIANG, Xufeng Telephone No. (86-10) 61648532 |
|---|---|

Form PCT/ISA /210 (second sheet) (July 2009)

## INTERNATIONAL SEARCH REPORT
Information on patent family members

International application No.

PCT/CN2016/097081

| Patent Documents referred in the Report | Publication Date | Patent Family | Publication Date |
|---|---|---|---|
| CN 1400986 A | 05 March 2003 | CN 1234756 C | 04 January 2006 |
| | | WO 0232986 A1 | 25 April 2002 |
| | | KR 20020064348 A | 07 August 2002 |
| | | JP 2002201301 A | 19 July 2002 |
| | | EP 1266928 A1 | 18 December 2002 |
| | | US 2002193459 A1 | 19 December 2002 |
| | | TW 593471 B | 21 June 2004 |
| | | KR 100539131 B1 | 26 December 2005 |
| | | US 6849667 B2 | 01 February 2005 |
| | | JP 2007238958 A | 20 September 2007 |
| CN 101781406 A | 21 July 2010 | None | |
| CN 105694430 A | 22 June 2016 | None | |
| US 2015038606 A1 | 05 February 2015 | WO 2015017089 A1 | 05 February 2015 |
| | | TW 201512264 A | 01 April 2015 |
| | | EP 3027378 A1 | 08 June 2016 |
| | | VN 47008 A | 25 May 2016 |
| | | KR 20160038043 A | 06 April 2016 |
| | | CN 105431268 A | 23 March 2016 |
| US 2015038605 A1 | 05 February 2015 | TW 201512263 A | 01 April 2015 |
| | | EP 3027377 A1 | 08 June 2016 |
| | | CN 105431269 A | 23 March 2016 |
| | | KR 20160040638 A | 14 April 2016 |
| | | VN 47013 A | 25 May 2016 |
| | | WO 2015017088 A1 | 05 February 2015 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007082838 A
- US 20120329892 A1
- US 200780002602 A
- CN 201110054581